# EUROPEAN PATENT APPLICATION

(11) **EP 1 523 178 A2**
(43) Date of publication of application: **13.04.2005**
(21) Application number: 04022432.1
(22) Date of filing: 21.09.2004
(51) Int. Cl.: H04N 5/76

(54) **Apparatus and method for recording an image and computer program for the image recording apparatus**

(30) Priority: 09.10.2003 JP 2003350403
(71) Applicant: NEC CORPORATION, Tokyo (JP)
(72) Inventor: Okamoto, Hiroshi, Minato-ku, Tokyo (JP)
(74) Representative: Glawe, Delfs, Moll & Partner

(57) **Abstract**

In a mobile communication terminal, a CPU (20) stores audio frame data, image frame data, and management information (MI) in respective storage areas (storage device) (16). The management information (MI) contains information of storage positions or the like of the audio frame data and the image frame data thus stored. Whenever idle capacities of the storage areas become smaller than respective predetermined amounts, the CPU (20) moves a position of a start frame of the stored image frame data from a current first I frame position up to a second I frame position. Then, the CPU (20) successively stores newly inputted image frame data in the resultant positions before such movement from the oldest position. During the storage, the CPU (20) performs erase and storage of the audio frame data so as for the position of the audio frame data to correspond to the storage position of the image frame data.

## Description

### BACKGROUND OF THE INVENTION

### Field of the Invention

The present invention relates to a technical field in which inputted image data is stored in a storage medium (storage device) such as a memory. The present invention also relates to a technical field in which information obtained by multiplexing image information and audio information is stored in a storage medium, for example.

### Description of the Related Art

In recent years, for example, as a mobile telephone which is a typical mobile communication terminal, one in which an image sensor (image pickup device, camera) utilizing a charge coupled device (CCD) or the like is installed become popular. With such a mobile telephone, motion image data obtained through photographing can be stored in a memory, and it is also possible to perform display of a motion image based on the stored image data, or transmission of the motion image based on the stored image data to an external apparatus.

However, in such a mobile telephone, due to a limited storage capacity of a memory or the like for storing therein motion image data, there is a limit to a time period for continuous image recording. For this reason, prior to start of photographing, a user must start recording of a motion image after estimating a timing at which a scene which he/she wants to photograph comes. However, during the motion image recoding using the image sensor of such amobile telephone, an idle capacity of the memory is used up before a scene actually comes which a user intends to originally photograph, and hence the motion image recording is forced to be encoded in some cases.

Now, an information delivery system in which information an event sponsor delivers by utilizing an external apparatus is received at a mobile information terminal borrowed in an event hall is proposed in JP 2003-69476A. In this information delivery system, the mobile information terminal stores the received information in a memory device (storage unit 13). Then, when an amount of stored image and audio information and the like has exceeded a predetermined storable capacity, the mobile information terminal successively erases the stored information from the oldest one. As a result, even when the mobile information terminal includes a memory device having a limited storage capacity, the mobile information terminal can store the newest information in the memory device.

However, in JP 2003-69476 A, image information is stored in files in a storage unit 13 of the mobile information terminal (image information 1 ton) , as apparent from Fig. 1 of JP 2003-69476 A. A configuration of the storage unit 13 is set due to an apparatus configuration with which an image or the like which a user possessing this mobile information terminal desires to reproduce can be suitably selected by utilizing a selector 14. Thus, in JP 2003-69476 A, when an amount of stored information has exceeded a storable capacity of the storage unit 13, the mobile information terminal successively erases the stored old information in files from the oldest image information, and newly stores the newest image information file in place of the erased old information. Thus, when image information of a desired scene was recorded in the automatically erased image information file, a user can no longer reproduce this scene.

To begin with, in JP 2003-69476 A, the individual image information files which the user can select for the reproduction are information which a third person recorded using an external apparatus in advance. Consequently, the user must select a desired image information file in which image information of a scene which he/she desires to reproduce is recorded (fixed) from the various image information files stored in the storage unit 13. As the case may be, it is also estimated that the image information file having the desired scene recorded therein is absent from the beginning. In addition, a concrete method related to what kind of apparatus the third person operates in what manner in order to fix (record) the individual image information files in a storage medium is not stated in JP 2003-69476 A. In addition, it is not concretely described in JP 2003-69476 A whether the individual image information files are image information files which are obtained by simply carrying out the photographing (random continuous photographing) for a given time period, or image information files for which the edition is suitably carried out by the third person so that a time period required for each of the resultant image information files falls within a predetermined time period.

Moreover, a technique in which in a system having a mobile telephone and a center connected to each other through a communication line, image data received from the mobile telephone is preserved in the center is proposed in JP 2002-344649 A. In this system, the mobile telephone temporarily stores therein image data and audio data to be transmitted until completion of the transmission of the image data and the audio data to the center, and then erases the image data and the audio data after completion of the transmission.

However, although it is described in JP 2002-344649 A that the image data temporarily stored in the mobile telephone is erased after being sent to the center, units, kinds or the like of erased image data are not described therein at all.

### SUMMARY OF THE INVENTION

The present invention has been made in the light of the above-mentioned circumstances, and it is, therefore, an object of the present invention to provide an apparatus and a method for recording an image, and a computer program for the image recording apparatus with which a user can surely and readily record desired image information of continuously inputted image information using a storage device having a limited storage capacity.

In order to attain the above-mentioned obj ect, the features of an image recording apparatus according to the present invention are as follows.

That is, an image recording apparatus includes image recording control means (control circuit 12, CPU 20) for recording image information in a storage device (16, 163), the recording image information being continuously inputted in a state of being divided in predetermined division units and represents at least a motion image characterized in that the image recording control means erases, based on the predetermined division units, oldest image information of the image information recorded in said storage device in the state of being divided in the predetermined division units whenever an amount of image information recorded in said storage device exceeds a predetermined recordable capacity until detecting a recording end instruction, and,successively records newly inputted image information in a recording position of the erased image information.

In the above structure, the image information divided in the predetermined division units is preferably image frame information based on a predetermined encoding procedure.

Also preferably, for example, the image frame information constituting one unit of the predetermined division units contains at least an Intra-coded (I) frame, and the image recording control means erases, as an object to be erased, the image frame information ranging from the frame information of the oldest first I frame to the frame information right before a next second I frame of a plurality of image frame information recorded as the image information divided in the predetermined division units in the storage device.

Moreover, in a preferred embodiment, it is characterized in that the image recording control means changes a recording start position of the plurality of image frame information recorded in the storage device from a recording position of the first I frame to a recording position of the second I frame, and then overwrites the image frame information as the newly inputted image information in the recording position ranging from the recording position of the first I frame to the recording position of the second I frame to erase the object to be erased.

Note that the above-mentioned object can also be attained by an image recording method corresponding to the image recording apparatus including the above-mentioned constituent elements.

In addition, the above-mentioned object can also be attained by a computer program with which the image recording apparatus including the above-mentioned constituent elements and themethod corresponding to the same are realizedby a computer, by and a computer readable storage medium having the computer program stored therein.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The above and other objects, features and advantages of the present invention will become more apparent from the following detailed description when taken in conjunction with the accompanying drawings wherein:
Fig. 1 is a block diagram exemplifying a configuration of a mobile communication terminal to which the present invention can be applied;
Fig. 2 is a diagram conceptually showing an example of storage of data in a RAM which the mobile communication terminal includes in an embodiment;
Fig. 3 is a diagram showing a format of motion image file data which can be applied to the mobile communication terminal according to the embodiment;
Fig. 4 is a diagram explaining a method of encoding image data which can be applied to the mobile communication terminal according to the embodiment;
Fig. 5 is a flow chart showing a processing operation in sensing a motion image in the mobile communication terminal according to the embodiment;
Fig. 6 is a flow chart showing a data management procedure for storage areas within a RAM in the mobile communication terminal according to the embodiment; and
Fig. 7 is a diagram explaining the data management procedure for the storage areas within the RAM in the mobile communication terminal according to the embodiment.

### DETAILED DESCRIPTION OF THE PREFERRED EMBODIMENTS

Preferred embodiments of the present invention will now be described in detail in accordance with the accompanying drawings.

A preferred embodiment in which an image recording apparatus according to the present invention is applied to a mobile communication terminal will hereinafter be described in detail with reference to the accompanying drawings.

First of all, in the following description, "image information (image data)" means information (containing only a motion image) not containing audio information.

In addition, "motion image file data" means information which is obtained by multiplexing audio information (audio data) and the above-mentioned image information (note that the motion image file data may be referred to as "multiplexed data").

The mobile communication terminal (image recording apparatus) according to this embodiment can carry out, with a shutter manipulation by a user as a trigger, sense a motion image with an image sensor (image pickup device, camera) 18 and parabolic reflection with a microphone 19, and start and end of recording of the data on the sensed motion image (image) and the data on the voice obtained through the parabolic reflection in a storage device (memory) 16. The mobile communication terminal endlessly and continuously records the image data and audio data in each data file until the mobile communication terminal detects a shutter manipulation for end of the recording.

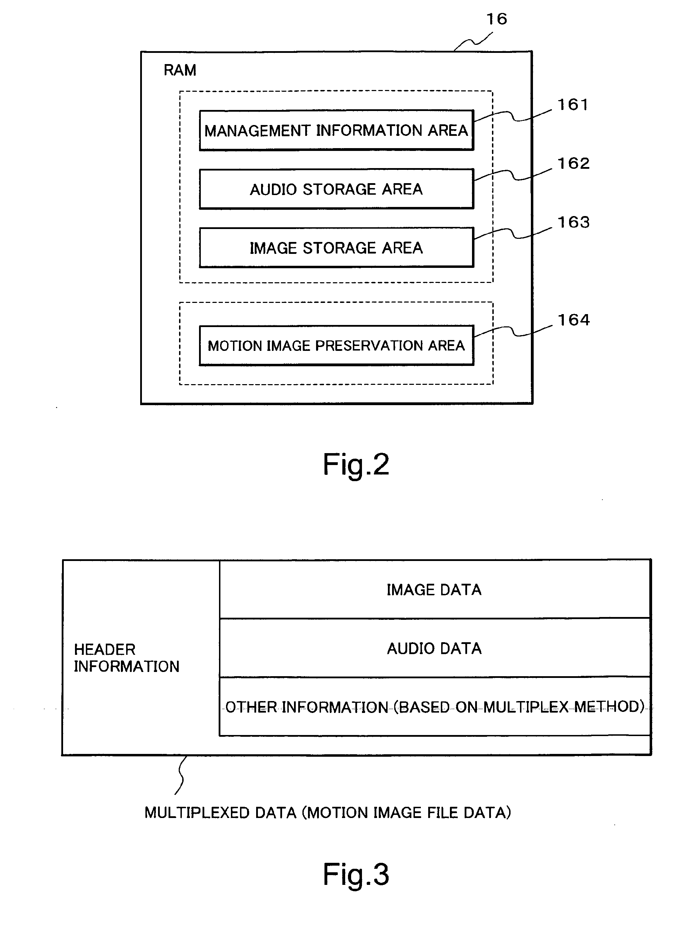

In addition, the mobile communication terminal according to this embodiment, when recording the image data and the audio data, stores the audio data, the image data, and management information (MI) in predetermined storage areas 161 to 163 (refer to Fig. 2) within the storage device 16 provided therein, respectively. Each of those storage areas 161 to 163 has a limited storage capacity. Here, the management information (MI) is information used to manage a storage situation of the audio data and the image data stored in the respective storage areas 162 and 163.

In order to continue the above-mentioned endless recording, whenever an amount of image data which is successively recorded in the storage device 16 has exceeded a predetermined recordable capacity, the mobile communication terminal provides a state in which parts of the audio data and the image data stored in the respective storage areas 162 and 163 can be erased or overwritten by referring to the management information (MI) stored in the management information area 161. The mobile communication terminal carries out such an erasing or overwriting operation in frames as predetermined division units for the image data. Then, the mobile communication terminal stores the audio data and the image data to be newly stored in the storage areas 162 and 163 of the audio data and the image data the parts of which have been erasable or overwritable.

Then, during the endless recording, the user carries out the shutter manipulation again at a time point when data on a desired scene can be recorded, to thereby allow the data on the desired scene to be surely fixed in the single data file. That is, the user can record data on the sensed desired scene together with data on the voice in the storage device 16 without being nervous about a recordable time period due to the limited storage capacity of the storage device provided in the mobile communication terminal.

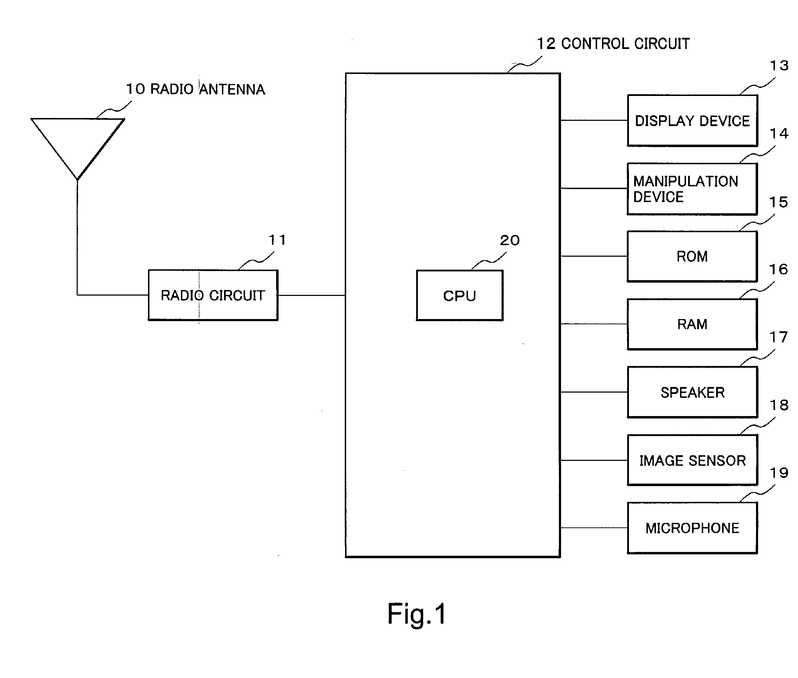

Next, a configuration of the mobile communication terminal for realization of the above-mentioned operation will be described in detail. First of all, the configuration of the mobile communication terminal will now be described with reference to Fig. 1. Fig. 1 is a block diagram exemplifying the configuration of the mobile communication terminal to which the present invention can be applied.

The mobile communication terminal of the present invention includes a radio antenna 10, a radio circuit 11, a control circuit 12, a display device 13, a manipulation device 14, a read only memory (ROM) 15, a random access memory (RAM) as the storage device 16, a speaker 17, an image sensor 18, and a microphone 19.

The radio circuit (radio communication unit) 11 demodulates an electric wave received at the antenna 10, and subjects a digital signal outputted from the control circuit 12 to phase-modulation. In addition, the radio circuit 11 has a function similar to that of a radio transmission/reception unit of a known radio communication terminal. In this connection, the antenna 10 transmits/receives the electric wave which has been subjected to phase-modulation, and has a function similar to that of an antenna of the known radio communication terminal.

Then, a voice of the user is inputted to the microphone 19. The speaker 17 outputs a voice (sound) to the user.

The control circuit 12 includes a central processing unit (CPU) 20 for managing the overall operation of the mobile communication terminal, and hardware (not shown) . The CPU 20 controls the overall operation of the mobile communication terminal by executing various software programs. During the control for the overall operation of the mobile communication terminal, the RAM 16 is used for a work in operation of the CPU 20. In addition, in this embodiment, the RAM 16 is utilized as storage areas (refer to Fig. 2, and its details will be described later) for image data, audio data, and the like.

The ROM 16 is a non-volatile memory (such as a flash memory) for example. An operation program of the CPU 20, various parameters, user data (such as e-mail documents and telephone numbers), and the like are stored in the ROM 16.

The manipulation device 14 is manipulated by the user when the user selects the various functions, or manipulates various functions of the mobile communication terminal. Key pads or the like can be applied to the manipulation device 14.

The image sensor 18 is an image pickup device utilizing a CCD, a complementary metal-oxide semiconductor (CMOS), and the like, and can sense an external image (motion image) . The image sensor 18 inputs image data representing the sensed image to the control circuit 12. The control circuit 12 instructs the display device 13 to display thereon the motion image based on the image data inputted thereto.

In this embodiment, the control circuit 12 instructs the RAM 16 to store therein the image data corresponding to the image sensed with the image sensor 18, and audio data corresponding to a voice inputted through the microphone 19. Moreover, the control circuit 12 instructs the RAM 16 to store therein image data and audio data received from the external apparatus through the radio circuit 11.

In addition, the control circuit 12 instructs the display device 13 to display thereon the motion image based on the image data received from the external apparatus through the radio circuit 11. Also, the control circuit 12 instructs the speaker 17 to output the audio data received from the external apparatus through the radio circuit 11 in the form of a voice.

Note that at the present time, a general technique can be adopted for the operation itself for the voice output processing and the image display processing which the mobile communication terminal having the above-mentioned configuration according to this embodiment executes, the data transmission/reception processing or the like which is executed between the external apparatus and the mobile communication terminal of this embodiment. Thus, the detailed description of such an operation itself in this embodiment is omitted here for the sake of simplicity.

Next, an example of storage of data in the RAM 16 provided in the mobile communication terminal will hereinafter be described with reference to Fig. 2. Fig. 2 is a diagram conceptually showing an example of storage of data in the RAM 16 provided in the mobile communication terminal in this embodiment.

As shown in the figure, the RAM 16 has a management information (MI) area 161, the audio storage area 162, the image storage area 163, and a motion image preservation area 164. Amounts of information storable in the audio storage area 162 and the image storage area 163 of the RAM 16 are limited owing to their predetermined storage capacities (their maximum storage capacities) .

The audio storage area 162 is an area in which audio data is to be stored. In this embodiment, the control circuit 12 instructs the RAM 16 to store therein the audio data with the audio data being divided for frames.

The image storage area 163 is an area in which image data is to be stored. In this embodiment, the control circuit 12 instructs the RAM 16 to store therein the image data with the image data being divided for frames.

The management information area 161 is an area in which the management information MI is to be stored. The management information MI is information for management of the audio data stored in the audio storage area 162 and the image data stored in the image storage area 163. Here, the management information MI contains the following information.

That is, with respect to frames which constitute the image data and which are stored in the image storage area 163, the management information MI about the image data contains information such as:
- a start frame,
- an end frame,
- a pointer specifying an address space, on the RAM 16, which represents storage positions of the frames (containing the start and end frames), and
- kinds of frames (such as an Intra-coded (I) frame and a Predictive-coded (P) frame).

In addition, with respect to the frames which constitute the audio data and which are stored in the audio storage area 162, the management information MI about the audio data contains information such as:
- a Start frame,
- an end frame, and
- a pointer specifying an address space, on the RAM 16, which represents storage positions of the frames (containing the start and end frames).

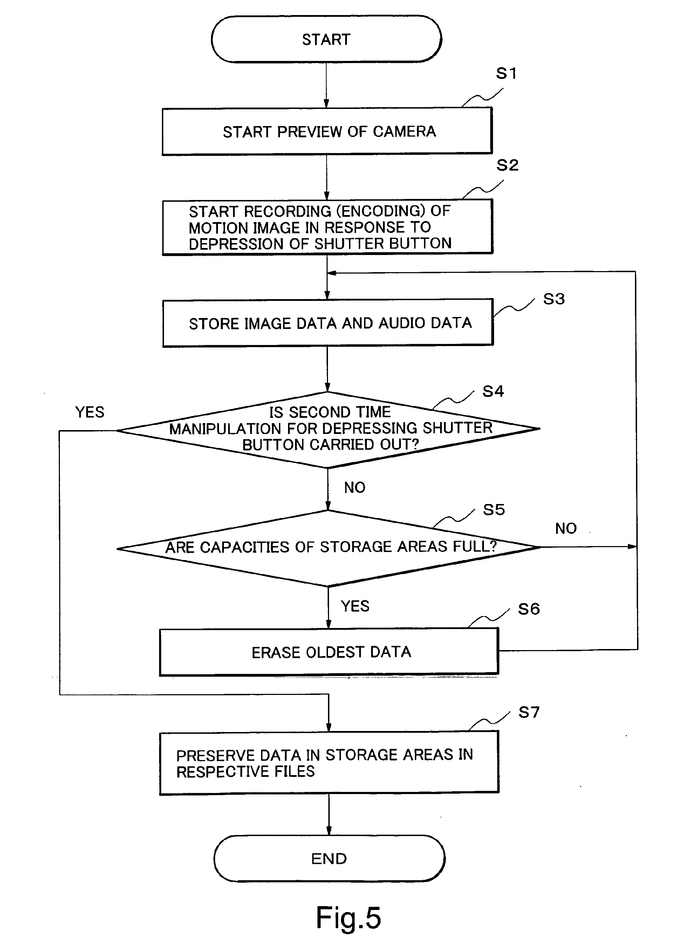

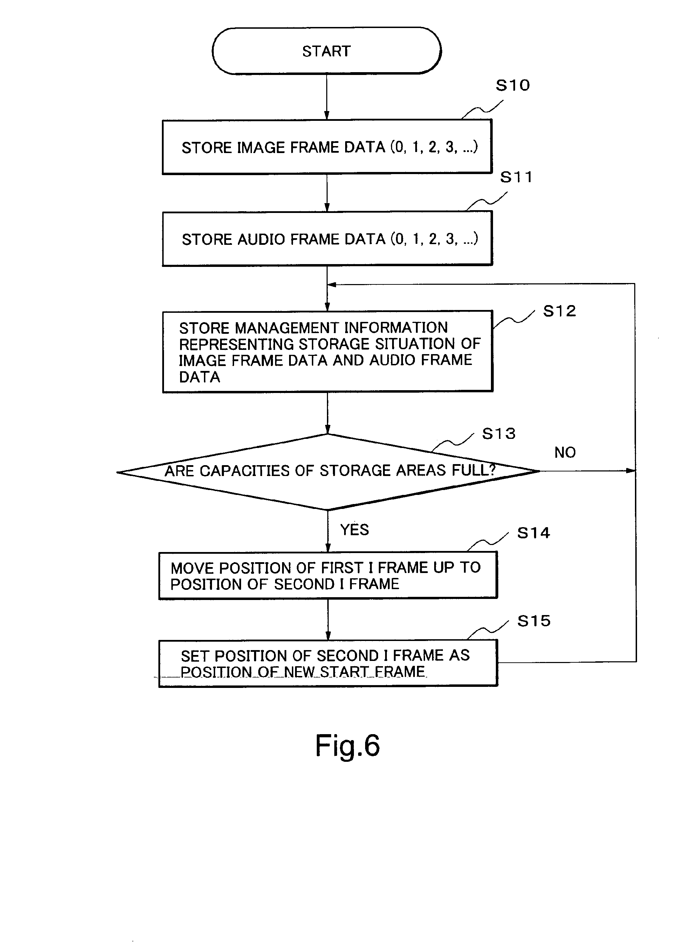

Here, "the start frame", as a general rule, means an image frame which is firstly generated when the shutter manipulation is carried out once (refer to Step S2 in Fig. 5) . Then, in and after the image storage area 163 in the RAM 16 becomes full as the user continues the recording of the data on the motion image (refer to Steps S5 and S13 in Figs. 5 and 6), the start frame gradually shifts in a late time direction (refer to Steps S14 and S15 in Fig. 6)(its details will be described later with reference to Figs. 5 and 6) . On the other hand, "the end frame" means the newest image frame of the image frames which are successively generated during the sensing of a motion image.

Then, the control circuit 12 multiplexes the audio data stored in the audio storage area 162 and the image data stored in the image storage area 163 based on the management information MI and in accordance with a predetermined procedure to thereby generate motion image file data (multiplexed data). The motion image preservation area 164 is an area in which the motion image file data is to be preserved.

Next, a format of the motion image file data will be described with reference to Fig. 3. Fig. 3 is a diagram showing a format of the motion image file data which can be applied to the mobile communication terminal according to this embodiment.

The motion image file data (multiplexed data) shown in Fig. 3 is constituted by at least:
- the image data based on which the motion image is obtained during the reproduction,
- the audio data based on which the voice is obtained during the reproduction,
- information specific to the adopted multiplex method (such as character information for display of a telop, and various command information), and
- header information.

Here, the header information contains control information which is used to adjust a speed during the reproduction so that an image and a voice are reproduced at the same pitch as that when the image data and the audio data were recorded. In addition, the header information contains reproduction time information representing a time period required to reproduce the audio data (a necessary time for the reproduction).

Note that in this embodiment, the control circuit 12 multiplexes the audio data stored in the audio storage area 162 and the image data stored in the image storage area 163 in accordance with a predetermined format such as an MPEG-4 (MP4) system or an Advanced Streaming Format (ASF).

The image data is stored in the image storage area 163 with the image data being encoded based on a predetermined encode method. That is, this reason is that since the image signal outputted for each frame from the image sensor 18, in a manner of speaking, can be regarded as a set of still images, when the individual still images are directly digitized to be stored in the image storage area 163, an amount of resultant information becomes too much.

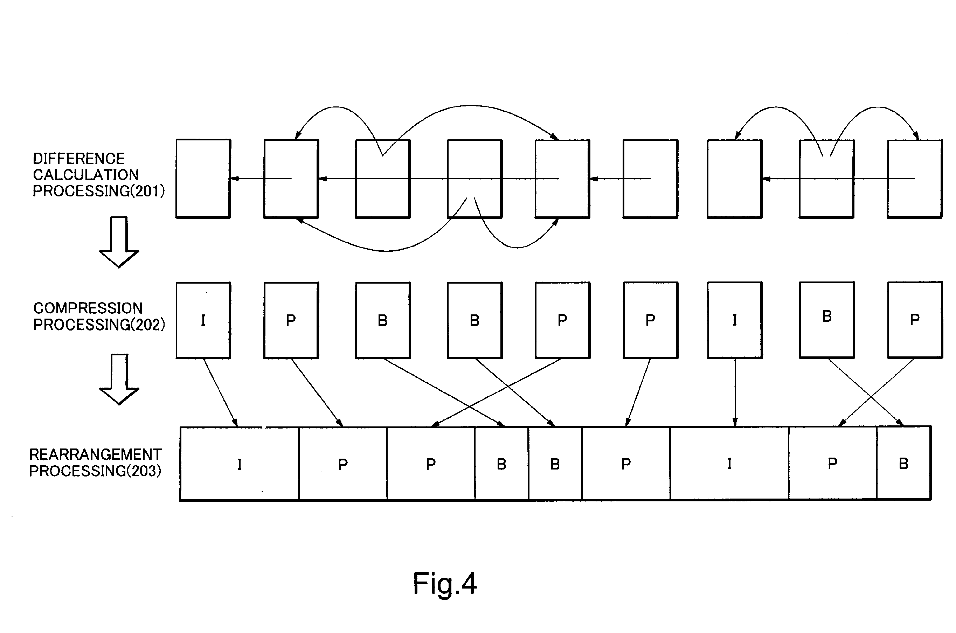

Here, as for the method including encoding the image data, there is an encode method including not only compressing information about frames but also using a property specific to the image data. The method including encoding the image data will hereinafter be described with reference to Fig. 4.

Fig. 4 is a diagram explaining a method including encoding the image data which can be applied to the mobile communication terminal according to this embodiment.

The encode method shown in Fig. 4 is based on a general property in which in a plurality of frames constituting the image data, a difference between the adjacent frames is small (a difference between a still image two by two is small).

That is, in this encode method, a compression processing which is nearly equal to that when still image data is compressed is executed for the start frame representing a first image (still image) when the photographing is started, the frame generated at a timing right after the user changes a scene over to another one during the photographing for example, and the like of the frames constituting the image data. Such a frame regarded as the still image data is referred to as an Intra-coded (I) frame. Then, although an amount of data in the I frame after completion of the compression processing becomes more than that of each of other frames, the image can be reproduced (the still image can be reproduced) using only the data constituting the I frame.

Then, in this encoding method, when a difference between the noted frame and the frame right before the noted frame of the frames constituting the image data is small, a compression processing 202 is executed after a difference calculation processing 201 for calculating a difference between the noted frame and the frame right before the noted frame is executed. The calculated difference is referred to as a Predictive-coded (P) frame. This P frame contains only a portion of the difference between the noted frame and the frame right before the noted frame as the image information corresponding to the noted frame. Thus, although a size of the P frame after completion of the compression processing becomes very small, not only information in its own frame (i.e., information in the P frame), but also information in the frame right before the noted frame are required during the reproduction of an image.

Moreover, in the compression processing 202, a difference between the frames before and behind the noted frame of the frames constituting the image data is obtained to obtain an amount of information which is less than that in the P frame. The difference obtained through this compression processing is referred to as a Bidirectionally-predictive-coded (B) frame. Although with this B frame, an amount of image data can be made less than that in the P frame, not only information in its own frame (i.e., the B frame), but also information in the frames before and behind the noted frame are required in reproducing the image. In addition, since the B frame requires the information in the frames before and behind the noted frame in reproducing the image data, a rearrangement processing 203 for rearranging the frames is executed during the compression processing.

Note that a method including obtaining the difference between the frames before and behind the noted frame, and the compression method for the frames differ depending on the encode methods. In general, when image data is encoded, since an amount of data on I frame is large, only a very small number of frames are inserted into the image data after completion of the encode processing. Then, in the image data after completion of the encode processing, most of the remaining frames become either the P frames or the B frames. Note that examples of the encode method include a Moving Picture Experts Group phase (MPEG) -2, MPEG-4 Video, and H. 263 (International Telecommunication Union-Telecommunication (ITUT) recommendation about IP telephones). In this embodiment as well, it is supposed that the image data based on any one of those general encode methods is stored in the image storage area 163.

On the other hand, normally, the audio data is also encoded in accordance with any encode method in order to reduce an amount of data. In the case of the audio data, in general, there is adopted a method in which audio data for a fixed time period is managed as one frame, and the audio data is compressed in frames. With respect to a length of one frame, there is a method in which all the frames are made identical in length to one another, or there is a method in which a length of a frame differs each time. However, in many methods, an average length of frames is about several tens of milliseconds. Examples of the encode method include an MPEG Audio Layer 3 (MP3), an Advanced Audio Coding (AAC), a Windows (R) Media Audio (WMA) , and an Advanced Multi Rate (AMR) CODEC. In this embodiment as well, it is supposed that the audio data based on any one of those general encode methods is stored in the audio storage area 162.

Next, the processing operation during the sensing of a notion image in the mobile communication terminal according to this embodiment will hereinafter be described with reference to Fig. 5. Fig. 5 is a flow chart showing the processing operation luring the sensing of a motion image in the mobile communication terminal according to this embodiment. This flow chart represents a processing procedure for a software program executed by the CPU 20 in the control circuit 12 shown in Fig. 1.

First of all, the user who intends to carry out the sensing (including the recording of the sensed motion image) using the image sensor 18 of the mobile communication terminal shown in Fig. 1 carries out a predetermined manipulation using the manipulation device 14 to select "a motion image sensing function". The CPU 20 of the control circuit 12, in response to detection of the selection manipulation, instructs the image sensor 18 to start the sensing. Then, the CPU 20 generates digital image data from an image signal outputted from the image sensor 18, and instructs the display device 13 to display thereon an image (display of preview) based on the resultant digital image data (Step S1). The image displayed at this time represents an image which is currently sensed with the image sensor 18. At this time, the CPU 20 instructs the microphone 19 to output a voice based on the audio signal obtained through the parabolic reflection using the microphone 19 or the corresponding digital audio data.

The user judges a timing at which the motion image in being sensed is started to be recorded from the preview display or the like in Step S1 for example, and then depresses a shutter button of the manipulation device 14 at a suitable timing. The CPU 20, in response to detection of the depressing manipulation, starts the encode (image compression processing) based on the above-mentioned predetermined data format (MPEG-4 or the like) for the above-mentioned digital image data which is successively generated at and after that detection timing (Step S2). In addition, at this time, the CPU 20 starts the encode based on the above-mentioned predetermined data format (AMR or the like) for the digital audio data based on the audio signal obtained through the parabolic reflection using the microphone 19.

In response to start of the recording of the image data and the audio data in Step S2, the CPU 20 instructs the RAM 16 to store the image data in its image storage area 163. In addition, the CPU 20 instructs the RAM 16 to store the audio data in its audio storage area 162.

Moreover, the CPU 20 instructs the RAM 16 to store the management information MI representing the storage situation of the image data and the audio data in its management information area 161 (Step S3).

When the user judges to intend to end the recording of the image data and the voice data in being sensed using the mobile communication terminal, he/she depresses the shutter button again. The CPU 20 continues the operation for recording the image data and the audio data in Step S3 until the CPU 20 detects the second time manipulation for depressing the shutter button in Step S4 (in case where the result of the judgment in Step S4 is NO).

As described previously, the amounts of storable information in the audio storage area 162 and the image storage area 163 are limited due to the predetermined storage capacities (maximum storage capacities) of the audio storage area 162 and the image storage area 163, respectively. Then, the CPU 20 judges whether or not the amount of information of the image data stored in the image storage area 163 and the amount of information of the audio data stored in the audio storage area 162 have exceeded the respective predetermined storage capacities while the recording operation in Step S3 is continuously carried out (Step S5).

When the CPU 20 judges in Step S5 that the amount of information of the image data stored in the image storage area 163 and the amount of information of the audio data stored in the audio storage area 162 have exceeded the respective predetermined storage capacities (when the result of the judgment in Step S5 is YES, i.e., there is no idle capacity), the CPU 20 successively erases the image data stored in the image storage area 163 and the audio data stored in the audio storage area 162 from the oldest ones, respectively (Step S6) based on the management information MI stored in the management information area 161. Thereafter, the CPU 20 returns the operation back to the processing in Step S3. Then, in Step S3, the CPU 20 instructs the RAM 16 to store the image data and the audio data which are to be newly stored in the areas, of the image storage area 163 and the audio storage area 162, from which the oldest image data and the oldest audio data have been erased in Step S6, respectively.

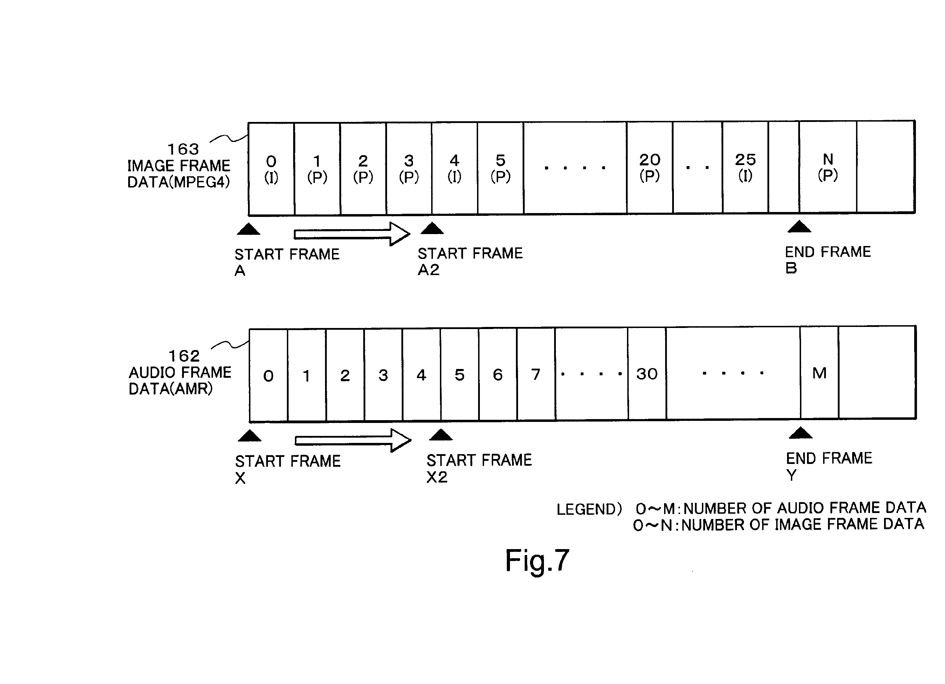

Note that a procedure for the data erase in Step S6 and a procedure for the subsequent data recording in Step S3 will be described later with reference to FIGS. 6 and 7.

On the other hand, when the second time manipulation for depressing the shutter button is detected in Step S4 (when the result of the judgment in Step S4 is YES), the CPU 20 sets the newest image frame data and the newest audio frame data recorded in the RAM 16 at the timing of the second time manipulation for depressing the shutter button in the respective end frames, and then stops the recording of any of the image frame data and any of the audio frame data in the RAM 16 at and after that timing (Step S7). That is, the image frame data and the audio frame data which have been continuously recorded in the RAM 16 in the endless manner until that time are fixed in the image storage area 163 and the audio storage area 162 of the RAM 16, respectively, at that timing.

Moreover, in Step S7, the CPU 20 multiplexes the image data stored (fixed) in the image storage area 163 and the audio data stored (fixed) in the audio storage area 162 based on the management information MI stored in the management information area 161 in accordance with any one of the above-mentioned predetermined methods (e.g., the ASF and the like) (Step S7). Moreover, in Step 57, the CPU 20 preserves the multiplexed data (motion image file data) generated through the multiplexing process in the motion image preservation area 164.

It should be noted that after completion of the preservation of the motion image file data in Step S7, the CPU 20, in accordance with a predetermined manipulation by the user, can store the preserved motion image file data in a non-volatile memory card (not shown) detachably inserted into the mobile communication terminal, or can transmit the preserved motion image file data to an external apparatus through the radio circuit 11. Since at the present time, a general constitution can be adopted for such management of the data, its detailed description in this embodiment is omitted here for the sake of simplicity.

Next, a method including managing the data in the storage areas 161 to 164 within the RAM 16 will hereinafter be described with reference to Figs. 6 and 7. Fig. 6 is a flow chart showing a procedure for managing the data stored in the storage areas within the RAM 16 in the mobile communication terminal according to this embodiment.

In addition, Fig. 7 is a diagram explaining the procedure for managing the data stored in the storage areas within the RAM 16 in the mobile communication terminal according to this embodiment. In the audio frame data and the image frame data shown in Fig. 7, numerical characters 0 to M, and 0 to N within respective frames designate frame numbers.

As described above with reference to Steps S2 and S3 of Fig. 5, in response to the detection of the manipulation for depressing the shutter button (of the manipulation device 14) by the user, the control circuit 12 encodes the image data and the audio data, and stores the encoded image data and the encoded audio data in the RAM 16. A series of operations are shown in Steps S10 to S12 of Fig. 6.

The control circuit 12 converts the digital image data corresponding to the current sensed image (motion image ) obtained using the image sensor 18 into image frame data on the MPEG4 format, for example. Then, the control circuit 12 stores the image frame data on the MPEG4 format thus generated in the image storage area 163 (Step S10 in Fig. 6).

That is, when the preview display of the sensed image is carried out in Step S1 of Fig. 5, the control circuit 12 digitizes the image signals which are successively outputted from the image sensor 18 into digital image data. Then, in Step S10, the digital image data is converted into the frame data. In addition, when the image data and the audio data are encoded, the I frame is provided every lapse of a predetermined time period, and each of other frames is made the P frame.

Here, the I frame corresponds to encoded data which is obtained based on the digital still image data for the noted I frame. According to the I frame, when the image is reproduced, the original still image can be reproduced from only the encoded data. In addition, the P frame is a frame which is generated through the forward prediction encoding.

Next, the control circuit 12 converts the audio signal (the digital audio signal before encode) inputted through the microphone 19 during the preview display into audio frame data on the Advanced Multi Rate (AMR) CODEC format. Then, the control circuit 12 instructs the RAM 16 to store the resultant audio frame data on the AMR format in the audio storage area 162 (Step S11 in Fig. 6).

Then, the control circuit 12 instructs the RAM 16 to store the management information MI representing the storage situation of the image frame data stored in the image storage area 163 and the audio frame data stored in the audio storage area 162 in the management information area 161 (Step S12 in Fig. 6). Here, themanagementinformationMI, asdescribedabove, contains the information such as pointers to respective frames, a kind representing the I frame or the P frame, the start frame position and the end frame position.

In this embodiment, as described above, the amounts of storable information in the audio storage area 162 and the image storage area 163 are limited due to the predetermined storage capacities (maximum storage capacities) of the audio storage area 162 and the image storage area 163, respectively. Thus, if the encode processing in Steps S10 and S11, and the subsequent storage processing are continuously executed, then the audio storage area 162 and the image storage area 163 will overflow.

Then, when the amounts of information stored in the image storage area 163 and the audio storage area 162 have exceeded the respective maximum storage capacities as respective thresholds (when the result of the judgment in Step S13 is YES) , the control circuit 12 executes the following processing in order to prevent occurrence of the overflow to continuously record data on the newest image and data on the newest voice. Such processing corresponds to the processing in Step S6 in Fig. 5.

That is, the control circuit 12 refers to the information which is contained in the management information MI stored in the management information area 161 and which represents the positions and the kinds of the image frame data and the audio frame data. Then, with respect to the image frame data, the control circuit 12 firstly moves the position of the start frame (first I frame) of the image storage area 163 to a position of a second I frame becoming a next I frame position (Step S14) . Next, the control circuit 12 sets the second I frame as a new start frame (Step S15) . Then, the control circuit 12 overwrites new frame data to frame data on the recording position from the position of the updated first I frame to the position of the second I frame to store the new frame data therein (Step S12) . That is, the new frame data is overwritten to erase the frame data which has been stored until that time. During the overwrite, the control circuit 12 also moves the position of the start frame of the audio frame data, in the audio storage area 162, having a time period for the recording synchronized with a time period for the recording of the image frame data. The control circuit 12 repeatedly executes such a series of processing in order to avoid the overflow.

In a stage in which such data erase and data overwrite are never carried out, as previously described with reference to Fig. 3, the start frame corresponds to the still image (frame) which is sensed with the image sensor 18 right after the manipulation of the shutter button by the user detected by the CPU 20 in Step S2 in Fig. 5.

Here, such the series of processing will hereinafter be more concretely described with reference to Fig. 7. The end frame data (in a position B) moves in a direction indicated by an arrow in the figure through a process in which the image frame data is successively stored in the image storage area 163 in and after the detection of the manipulation of the shutter button in Step S2 (refer to Fig. 5). The control circuit 12 judges whether or not in this process, the pointer exhibiting the position B of the end frame data returns back to the left-hand end after reaching the right-hand end, and finally passes through a position A of the start frame currently set. This judgment corresponds to the judgment for presence or absence of the idle capacities in Step S5 (Step S13).

Next, when it is judged that the position B passes through the position A, the control circuit 12 sets a position (a position A2 in an example of Fig. 7) of the I frame which is located on the right-hand side of the position A and is nearest the position A as a position of a new start frame. Then, the control circuit 12 erases the frame data in the recording position from the position A to the position A2 (or set the frame data in the recording position from the position A to the position A2 in an overwritable state). During the erase processing, the control circuit 12 also moves a position of the start frame (from a position X to a position X2) of the audio frame data, in the audio storage area 162, having a time period for the recording synchronized with a time period for the sensing of the image frame data.

Then, the control circuit 12 successively overwrites and stores new image frame data in an area from the position A to the position A2. Likewise, the control circuit 12 successively overwrites and stores new audio frame data in an area from the position X to the position X2 corresponding to (synchronized with) the position X and the position X2.

As described above, in this embodiment, whenever the position of the start frame is successively moved in accordance with the above-mentioned procedure, the oldest image frame data at that time point is erased from the RAM 16 (or set in an erasable state) , and new frame data is overwritten to the area from which the oldest image frame data has been erased.

Consequently, according to the series of procedures described above, it is possible to realize the endless image recording for the storage device (the RAM 16) having the limited storage capacity. Thus, if the user carries out the shutter manipulation at a time point when verifying occurrence and recording of a desired scene (Step S4), then the image data on the image containing such a desired scene can be surely fixed (stored) to the storage device.

### (Effects of the embodiment)

According to the mobile communication terminal of this embodiment described above, the user can surely and readily record, in the storage device (the RAM 16) having the limited storage capacity, desired image information (and corresponding audio information) of image information (and audio information) which is continuously inputted.

That is, according to such a mobile communication terminal, the endless image recording can be carried out within a range of the storage capacity (data size) which is previously limited owing to the specification and the like of the mobile communication terminal itself or of the storage device. Thus, the user can continuously record the image information (and the audio information) in one data file as an object without being nervous about a continuous possible recording time period due to the'storage capacity. Hence, the user who is continuously recording the image information (and the audio information) depresses the shutter button at a time point when a desired scene is recorded, to thereby allow the data on the desired scene to be surely fixed to the data file concerned. That is, according to the mobile communication terminal of this embodiment, the user can surely and readily record the image information (and the audio information) without failing to sense an image of a desired scene.

### (Modifications and Applicabilities)

In the above-mentioned embodiment, there has been described as an example the apparatus configuration with which the image signal outputted from the image sensor 18 and the audio signal outputted from the microphone 19 are converted into the frame data on the predetermined data format by the control circuit 12 to be stored in the RAM 16. Moreover, the present invention is not intended to be limited to such an apparatus configuration, and hence can be applied to an apparatus configuration as well in which encoded image data and encoded audio data are suitably acquired from an external apparatus. In this case, the encoded image data and encoded audio data (that is, the image information divided in the predetermined division units) are supplied from the external apparatus via the radio communication line (the radio antenna 10 and the radio circuit 11) or a removable storage medium (not shown) attached to the mobile communication terminal .

In addition, the above-mentioned embodiment has been described as an example in which the image recording apparatus according to the present invention is applied to the mobile communication terminal able to multiplex the image data and the audio data. However, the present invention is not intended to be limited to such an apparatus configuration. That is, the image recording apparatus according to the present invention can be widely applied to apparatuses as long as each of the apparatuses serves to encode at least image data into a plurality of kinds of frames to record the resultant frames.

In addition, in the above-mentioned embodiment, there has been described as an example the apparatus configuration with which the multiplexed data having the image data and the audio data multiplexed thereinto is recorded in the mobile communication terminal. However, the present invention is not intended to be limited to such an apparatus configuration. That is, the present invention can be applied to an image recording apparatus for at least recording only a motion image (image data) containing no audio data.

It should be noted that the above-mentioned embodiment is only a suitable embodiment of the present invention, and hence the various changes can be made without departing from the subj ect matter of the present invention. For example, in the above-mentioned embodiment, the description has been given with respect to the specific case where the data management is carried out within the RAM 16. Moreover, the present invention is not intended to be limited to such a specific case. Thus, the present invention can be applied to a storage device or a storage unit as long as the storage device or the storage unit can store therein the image data (image frame data) and the audio data (audio frame data).

In addition, the above-mentioned embodiment has been described using the compression processing based on the I frame and the P frame as the method including encoding the image data. However, the present invention is not intended to be limited to such a constitution. For example, in the present invention, the compression processing using the B frame can also be carried out, and hence the image data can be compressed by utilizing any one of the various encode methods.

In addition, the image recording apparatus according to the present invention is not limited to an apparatus with which radio communication with an external apparatus can be carried out, and hence can be widely applied to electronic instruments as long as each of the electronic instruments can manage the image data and the audio data.

Note that the present invention which has been described based on the above-mentioned embodiment as an example is implemented by supplying a computer program able to realize the function of the flow charts referred in the description of the embodiment to the above-mentioned mobile communication terminal; and writing the computer program to the CPU 20 of the mobile communication terminal to execute the computer program thus written. In addition, the computer program supplied to the mobile communication terminal has only to be stored in a readable and writable memory or a non-volatile storage device.

In addition, in the case of the foregoing, at the present time, a general procedure as in a method including installing a computer program in the mobile communication terminal through various recording media, or in a method including downloading a computer program from the outside through a communication line such as the Internet can be adopted for the method including supplying the computer program to the mobile communication terminal. In such a case, the present invention is constituted by a code of such a computer program or a storage medium.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. An image recording apparatus comprising image recording control means for recording image information in a storage device, the recording image information being continuously inputted in a state of being divided in predetermined division units and represents at least a motion image, **characterized in that**:
said recording control means (12, 20) erases, based on the predetermined division units, oldest image information of the image information recorded in said storage device (16, 163) in the state of being divided in the predetermined division units whenever an amount of image information recorded in said storage device exceeds a predetermined recordable capacity until detecting a recording end instruction, and successively records newly inputted image information in a recording position of the erased image information.

2. The apparatus according to claim 1, **characterized in that** the image information divided in the predetermined division units is image frame information based on a predetermined encoding procedure.

3. The apparatus according to claim 2, **characterized in that** the image frame information constituting one unit of the predetermined division units contains at least an Intra-coded (I) frame, and
said image recording control means erases the image frame information, as an object to be erased, ranging from the frame information of an oldest first I frame to the frame information right before a next second I frame of a plurality of image frame information recorded as the image information divided in the predetermined division units in said storage device.

4. The apparatus according to claim 3, **characterized in that** said image recording control means changes a recording start position of the plurality of image frame information recorded in said storage device from a recording position of the first I frame to a recording position of the second I frame, and then overwrites the image frame information as the newly inputted image information in the recording position ranging from the recording position of the first I frame to the recording position of the second I frame so as to erase the object to be erased.

5. The apparatus according to any one of claims 1 to 4, **characterized in that** said image recording control means carries out recording of audio information which is continuously inputted in a state of being divided in division units different from the predetermined division units in said storage device (16, 162) synchronously with the recording of the image information, erases the corresponding audio information of the audio information recorded in the state of being divided in the division units synchronously with the erasing of the oldest image information and the recording of the newly inputted image information, and successively record newly inputted audio information in the recording position of the erased audio information.

6. The apparatus according to claim 5, **characterized in that** said image recording control means includes multiplex means for, in response to detection of the recording end instruction, multiplexing the image information and the audio information which are recorded in said storage device into one file based on a predetermined data format.

7. The apparatus according to any one of claims 1 to 6, further comprising:
image sensing means (18) for sensing an image of an outside of the image recording apparatus, and being **characterized in that**
said image recording control means includes image information generation means for generating the image information divided in the predetermined division units based on an image signal representing an image sensed with said image sensing means.

8. The apparatus according to any one of claims 1 to 7, **characterized by** further comprisingmeans for supplying the image information divided in the predetermined division units in said image recording control circuit.

9. The apparatus according to any one of claims 1 to 7, **characterized by** further comprising:
image information acquisition means (10, 11) for acquiring the image information divided in the predetermined division units from an external apparatus.

10. The apparatus according to any one of claims 1 to 9, **characterized in that** the image recording apparatus is a mobile communication terminal.

11. An image recording method, **characterized by** comprising:
continuously inputting (S1) image information, which represents at least a motion image, in a state of being divided in predetermined division units; and
recording (S2 to S7) the image information in a storage device (16, 163) such that erasing (S4 to S6), based on the predetermined division units, oldest image information of the image information recorded in said storage device in the state of being divided in the predetermined division units whenever an amount of image information recorded in said storage device exceeds a predetermined recordable capacity until detecting a recording end instruction, and successively recording (S2 to S3) newly inputted image information in a recording position of the erased image information.

12. The method according to claim 11, **characterized in that** the image information divided in the predetermined division units is image frame information based on a predetermined encoding procedure.

13. The method according to claim 12, **characterized in that** the image frame information constituting one unit of the predetermined division units contains at least an Intra-coded (I) frame, and
said recording (S6, S13 to S15) includes erasing the image frame information, as an object to be erased, ranging from the frame information of an oldest first I frame to the frame information right before a next second I frame of a plurality of image frame information recorded as the image information divided in the predetermined division units in said storage device.

14. The method according to claim 13, **characterized in that** said recording further includes:
changing a recording start position of the plurality of image frame information recorded in said storage device from a recording position of the first I frame to a recording position of the second I frame, and
overwriting the image frame information as the newly inputted image information in the recording position ranging from the recording position of the first I frame to the recording position of the second I frame so as to erase the object to be erased.

15. The method according to any one of claims 11 to 14, **characterized in that**:
said inputting includes continuously inputting recording of audio information in a state of being divided in division units different fromthe predetermined division units in addition to the image information, and
said recording includes:
recording the audio information in said storage device (16, 162) synchronously with the recording of the image information, and
erasing the corresponding audio information of the audio information recorded in the state of being divided in the division units synchronously with the erase of the oldest image information and the recording of the newly inputted image information, and
successively recording newly inputted audio information in the recording position of the erased audio information.

16. The method according to claim 15, **characterized in that** said recording further includes multiplexing, in response to detection of the recording end instruction, the image information and the audio information which are recorded in said storage device into one file based on a predetermined data format.

17. A computer program for controlling an operation of an image recording apparatus, which causes a computer to implement an image recording control function of recording image information which is continuously inputted in a state of being divided in predetermined division units and which represents at least a motion image in a storage device, **characterized in that**:
erasing, based on the predetermined division units, an oldest image information of the image information recorded in said storage device in the state of being divided in the predetermined division units whenever an amount of image information recorded in said storage device exceeds a predetermined recordable capacity until detecting a recording end instruction; and
successively recording newly inputted image information in a recording position of the erased image information.

18. The computer program according to claim 17, **characterized in that** said image recording control function includes:
carrying out recording of audio information which is continuously inputted in a state of being divided in division units different from the predetermined division units in said storage device synchronously with the recording of the image information,
erasing the corresponding audio information of the audio information recorded in the state of being divided in the division units synchronously with the erase of oldest image information and the recording of the newly inputted image information, and
successively recording newly inputted audio information in the recording position of the erased audio information.

19. The computer program according to claim 18, **characterized in that** said image recording control function further includes multiplexing, in response to detection of the recording end instruction, the image information and the audio information which are recorded in said storage device into one file based on a predetermined data format.
